# EUROPEAN PATENT SPECIFICATION

(11) **EP 3 837 802 B1**
(45) Date of publication and mention of the grant of the patent: **22.04.2026**
(21) Application number: 18765884.4
(22) Date of filing: 07.09.2018
(51) Int. Cl.: H04L 9/08

(54) **QPSK BASED RF-ASSISTED CV- QKD TRANSMISSION**
QPSK BASIERENDE RF-ASSISTED CV- QKD ÜBERTRAGUNG
CV- QKD TRANSMISSION RF-ASSISTÉE BASÉE SUR LA QPSK

(43) Date of publication of application: 23.06.2021
(73) Proprietor: Huawei Technologies Duesseldorf GmbH, 40549 Düsseldorf (DE)
(72) Inventor: SCHRENK, Bernhard, 1210 Vienna (AT); HÜBEL, Hannes, 1210 Vienna (AT); FUNG, Fred Chi Hang, 80992 Munich (DE)
(74) Representative: Epping - Hermann - Fischer
(86) International application number: PCT/EP2018/074144
(87) International publication number: WO 2020/048610

(56) References cited:
- EP-A1- 3 244 566
- ASIF RAMEEZ: "Future Quantum-to-the-Home (QTTH) All-Optical Networks (Invited Talk)", 2018 10TH INTERNATIONAL CONFERENCE ON ADVANCED INFOCOMM TECHNOLOGY (ICAIT), IEEE, 12 August 2018 (2018-08-12), pages 41 - 46, XP033536957, DOI: 10.1109/ICAIT.2018.8686543
- ASIF RAMEEZ ET AL: "Seamless Cryptographic Key Generation via Off-the-Shelf Telecommunication Components for End-to-End Data Encryption", 2017 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 21 June 2017 (2017-06-21), pages 910 - 916, XP033312281, DOI: 10.1109/ITHINGS-GREENCOM-CPSCOM-SMARTDATA.2017.140
- ASIF RAMEEZ: "Quantum encrypted signals on multiuser optical fiber networks: Simulation analysis of next generation services and technologies", 2017 8TH INTERNATIONAL CONFERENCE ON THE NETWORK OF THE FUTURE (NOF), IEEE, 22 November 2017 (2017-11-22), pages 159 - 164, XP033294499, DOI: 10.1109/NOF.2017.8251243
- BING QI ET AL: "Generating the Local Oscillator "Locally" in Continuous-Variable Quantum Key Distribution Based on Coherent Detection", PHYSICAL REVIEW X, vol. 5, no. 4, 1 October 2015 (2015-10-01), XP055316967, DOI: 10.1103/PhysRevX.5.041009
- "Quantum Key Distribution (QKD); Components and Internal Interfaces", vol. ISG QKD Quantum Key Distribution, no. V0.0.3, 4 June 2017 (2017-06-04), pages 1 - 49, XP014303537, Retrieved from the Internet <URL:docbox.etsi.org/ISG/QKD/70-Drafts/0003ed2/QKD-003ed2v003.pdf> [retrieved on 20170604]

## Description

### TECHNICAL FIELD

The invention relates to the field of quantum key distribution. More specifically, the invention relates to devices and methods for continuous variable quantum key distribution (CV QKD).

### BACKGROUND

Quantum key distribution (QKD) uses quantum carriers (also referred to as quantum signals), typically single-photon or strongly attenuated light pulses, for sharing a secret electronic key. Typically, a sequence of such light pulses, i.e. quantum signals, is transmitted from a transmitter (often referred to as "Alice") via a quantum channel to a receiver (often referred to as "Bob"), wherein each light pulse encodes a key bit. The quantum properties of light, in particular the Heisenberg uncertainty principle, ensure that no information can be gained on these key bits without disturbing the quantum state of the photons. Public communications over an additional classical channel are then used to estimate the maximum amount of information that a potential eavesdropper may have acquired, and to distil a secret key out of the raw data.

Several practical schemes for quantum key distribution have been proposed and implemented in the past, including discrete-variable (DV) and continuous-variable (CV) QKD are employed to distribute secret keys. DV-QKD is based on the principle of detecting individual photons, while CV-QKD is based on the principle of detecting the quadratures of light fields to obtain possibly more efficient alternatives to conventional photon-counting QKD techniques. From a practical point of view, the CV approach has potential advantages because it is compatible with the standard optical telecommunication technologies. It is foreseeable that this approach will become a viable candidate for large-scale secure quantum communications.

In discrete-variable quantum key distribution (DV-QKD), the transmitter and receiver devices differ greatly in their functionality. Whereas the production of optical quantum states is fairly easy (at least for approximate single photon states), the detection of said photonic states is hard and requires complicated single photon detectors which could be bulky and expensive. In access links it is therefore advantageous to have an expensive node connecting to the metropolitan network and inexpensive modules at the user side. Ideally, the expensive node should be able to cater for many users. In that way the cost of deployment per user can be kept low.

For continuous-variable quantum key distribution (CV-QKD), there is also an imbalance between the transmitter and receiver. The transmitter generally requires a fast random number generator, optical modulators and DAC converters. At the receiving side, the main components are, for example, an optical hybrid, a balanced detector (e.g., a balanced homodyne detector) and an ADC card. Although not immediately obvious in the CV-QKD case, the receiver may be the cheaper component, at least for small bandwidth transmission. ADC and balanced detectors for GHz transfer rates are expensive, whereas rates below 100 MHz can be accommodated with modest cost in equipment. Therefore, in a CV-QKD system the receiver should constitute the device at the end-user.

Users (receivers) of data normally pay for a certain bandwidth of service (speed of data connection). This concept will also be valid for Quantum Key Distribution (QKD). The higher the bandwidth, i.e. the higher the key rate, the more a service provider will be able to charge the customer. However, in order to change the bandwidth of QKD devices, large alterations are necessary. The transmitter and receiver units in a QKD link run at a fixed clock speed. All components are optimized for this clock speed and cannot be easily changed on demand or without exchanging some hardware components. This will incur higher costs and lead to possible downtime of the QKD link, which is not in the interest of the customer. The operator of the QKD link may want to be able to change the bandwidth of the link remotely via software commands, without physical modification and without unnecessary interruption of the key exchange.

In QKD systems so far, there has not been any attempt to include an adaptive bandwidth regulation scheme. Simple schemes, which rely on simply sending redundant information, do not work for QKD. For example, in order to reduce the bandwidth intentionally, redundant information can be sent, like every logical "1" is encoded as "111", thereby reducing bandwidth by two thirds. This is however not possible for QKD, since such an encoding allows a potential attacker to extract more information from the system, since more than one pulse contains the same information.

Reducing the clock cycle of current QKD systems does not work either, because generally all components of a QKD system are optimized to work in a small region of parameters.

Thus, there is a need for improved devices and methods that allow adjusting the bandwidth of a quantum communication channel of a QKD system.

Rameez Asif, "Future Quantum-to-the-Home (QTTH) All-Optical Networks (Invited Talk)", 2018, 10th International Conference on Advanced Infocomm Technology, discusses experiments on a four-state (Quadrature Phase Shift Keying 'QPSK') RF sub-carrier assisted continuous-variable quantum key distribution (CV-QKD) multi-user network based on ultra low loss quantum channel (pure silica core fiber 'PSCF') and micro-electromechanical systems (MEMS) based add/drop switch.

Asif and W. J. Buchanan, "Seamless Cryptographic Key Generation via Off-the-Shelf Telecommunication Components for End-to-End Data Encryption," 2017 IEEE International Conference on Internet of Things (iThings) and IEEE Green Computing and Communications (GreenCom) and IEEE Cyber, Physical and Social Computing (CPSCom) and IEEEz Smart Data (SmartData), 2017, pp. 910-916, reports the feasibility of using off-the shelf telecommunication components to enable high performance Continuous-Variable Quantum Key Distribution (CV-QKD) systems that can yield secure key rates in the range of 100 Mbit/s under practical operating conditions.

R. Asif, "Quantum encrypted signals on multiuser optical fiber networks: Simulation analysis of next generation services and technologies," 2017 8th International Conference on the Network of the Future (NOF), 2017, pp. 159-164, investigates the quadrature phase shift keying (QPSK) based CV-QKD network that is compatible with the next generation (NG) services such as point-to-point (P2P) transmission and multicast overlay (MCO) traffic for audio/video signalling.

Bing Qi, Pavel Lougovski, Raphael Pooser, Warren Grice, and Miljko Bobrek, "Generating the Local Oscillator "Locally" in Continuous-Variable Quantum Key Distribution Based on Coherent Detection" Phys. Rev. X 5, 041009, 21 October 2015, demonstrate a pilot-aided feedforward data recovery scheme that enables reliable coherent detection using a "locally" generated LO. Using two independent commercial laser sources and a spool of 25-km optical fiber, we construct a coherent communication system.

EP3244566A1 discloses systems and associated methods of performing coherent optical communication of quantum information between an emitter A and a distant receiver B, using a local local oscillator (LLO). Examples of LLO-based Continuous-Variable Quantum Key Distribution (CV-QKD) are described. Self-coherent schemes are used, said schemes consisting in deriving both signal and phase reference pulses from the same optical pulse thus ensuring an intrinsic strong signal to reference phase coherence. Different CV-QKD designs implementing various self-coherence phase sharing schemes are described and compared in terms of secret key rate and hardware requirements. Strong phase noise resilience can be obtained with standard telecom equipment such as low cost lasers.

### SUMMARY

The foregoing and other objects are achieved by the subject matter of the independent claims. Further implementation forms are apparent from the dependent claims, the description and the figures.

Generally, embodiments of the invention are based on the idea of distributing the quantum signal over several electrical subcarriers or sub-channels. The subcarriers can then be optically transmitted to a receiver and be demodulated by the receiver. The receiver can have hardware components which can distinguish and extract data from each subcarrier individually. Each subcarrier can be selectively tuned to extract key material or not. The selection can either be done electronically using electrical components or, alternatively, all sub-channels can be sampled digitally and the separation of each individual sub-channel can be performed digitally in a digital processing step.

More specifically, according to a first aspect the invention relates to a continuous variable quantum key distribution, CV-QKD, signal generator, comprising: a radio frequency, RF, modulator configured to modulate a RF signal with quantum key information for constructing one or more keys, wherein the RF modulator is configured to spread the quantum key information over multiple, i.e. two or more RF subcarriers of the RF signal, wherein the RF modulator is configured to electrically upconverted the subcarriers so that information is spread over a frequency band, containing the individual information subcarriers or channels; and an optical modulator configured to generate a CV-QKD signal by modulating the optical signal with the RF signal. The CV-QKD signal generator can be implemented as a component of a CV-QKD transmitter.

The one or more keys are multiple keys and the RF modulator is configured to modulate each subcarrier with quantum key information for constructing one of the multiple keys, wherein the optical modulator is configured to modulate the upconverted signal from the RF modulator onto an optical carrier.

In a possible implementation form of the first aspect, the subcarriers can occupy different frequency bands.

In a further possible implementation form of the first aspect, the subcarriers can have different center frequencies.

In a further possible implementation form of the first aspect, one of the subcarriers occupies a wider frequency band than another one of the subcarriers.

In a further possible implementation form of the first aspect, the CV-QKD signal generator is configured to inject the CV-QKD signal into an optical transmission path. The optical transmission path may comprise one or more of the following: air, vacuum, or an optical fibre.

According to a second aspect the invention relates to a corresponding method of generating a continuous variable quantum key distribution, CV-QKD, signal, wherein the method comprises the steps of: modulating a radio-frequency, RF, signal with quantum key information for constructing one or more keys, wherein modulating the RF signal with the quantum key information comprises spreading the quantum key information over multiple subcarriers of the RF signal, wherein the subcarriers are electrically upconverted so that information is spread over a frequency band, containing the individual information subcarriers or channels; and generating a CV-QKD signal by modulating an optical signal with the radio-frequency, RF, signal, wherein the one or more keys are multiple keys and the modulating comprises modulating each subcarrier with quantum key information for constructing one of the multiple keys, wherein the upconverted signal is modulated onto an optical carrier.

The method according to the second aspect of the invention can be performed by the CV-QKD signal generator according to the first aspect of the invention. Further features of the method according to the second aspect of the invention result directly from the functionality of the CV-QKD signal generator according to the first aspect of the invention and its different implementation forms described above and below.

According to a third aspect the invention relates to a continuous variable quantum key distribution, CV-QKD, signal processor, comprising: a detector configured to derive an RF signal from an optical CV-QKD signal received from the CV-QKD signal generator of the first aspect; and processing circuitry configured to derive quantum key information from multiple subcarriers of the RF signal. The CV-QKD signal processer can be implemented as a component of a CV-QKD receiver and enable the CV-QKD and a CV-QKD transmitter (which may include the CV-QKD signal generator according to the first aspect) to generate one or more keys. The detector may be a balanced detector, e.g., a balanced homodyne detector.

In a further possible implementation form of the third aspect, the balanced detector is configured to mix the optical CV-QKD signal with a local oscillator signal. The balanced detector may comprise a local oscillator configured to generate the local oscillator signal (also referred to as a mixing signal).

In a further possible implementation form of the third aspect, the CV-QKD signal processor further comprises an analog-to-digital converter configured to sample the RF signal. The CV-QKD signal processor may further comprise one or more filters for filtering one or more of the subcarriers. The CV-QKD signal processor may further comprise a frequency converter configured to convert the subcarriers into a base band.

In a further possible implementation form of the third aspect, the CV-QKD signal processor is configured to determine a key on the basis of the quantum key information by cooperating with a CV-QKD transmitter. Cooperating with the CV-QKD transmitter may comprise exchanging information via a classical (i.e. non-quantum) channel.

According to a fourth aspect the invention relates to a corresponding method of generating one or more keys, the method comprising the steps of: receiving an optical continuous variable quantum key distribution, CV-QKD, signal obtained from the method of the second aspect; deriving an RF signal from the CV-QKD signal; deriving quantum key information from multiple subcarriers of the RF signal; and generating the one or more keys on the basis of the quantum key information. Deriving the RF signal from the CV-QKD signal may comprise coherent detection.

The method according to the fourth aspect of the invention can be performed by the CV-QKD signal processor according to the third aspect of the invention. Further features of the method according to the fourth aspect of the invention result directly from the functionality of the CV-QKD signal processor according to the third aspect of the invention and its different implementation forms described above and below.

According to a fifth aspect the invention relates to a computer program product comprising program code for controlling a CV-QKD signal generator to perform the method according to the second aspect or for controlling a CV-QKD signal processor to perform the method according to the fourth aspect when executed on a processor. The computer program product may comprise a non-volatile memory in which the program code is stored. The CV-

QKD signal processor may comprise one or more processors configured to execute the program code so as to perform the method according to the fourth aspect.

According to a sixth aspect the invention relates to a CV-QKD system, comprising a CV-QKD transmitter which comprises a signal generator according to the first aspect and a CV-QKD receiver which comprises a signal processor according to the third aspect.

### BRIEF DESCRIPTION OF THE DRAWINGS

Further embodiments of the invention will be described with respect to the following figures, wherein:
Fig. 1 shows a schematic diagram illustrating a CV QKD system including a CV QKD signal generator and a CV QKD signal processor according to an embodiment of the invention;
Fig. 2a shows a diagram illustrating several subcarriers as used in a CV QKD signal generator according to an embodiment;
Fig. 2b shows a diagram illustrating the up-conversion of the subcarriers of figure 2a to different frequency bands as implemented in a CV QKD signal generator according to an embodiment;
Fig. 3a shows a diagram illustrating the frequency distribution of subcarriers on an optical carrier used by embodiments of the invention;
Fig. 3b shows a diagram illustrating the electrical signal after coherent detection by a CV QKD signal processor according to an embodiment;
Fig. 4a shows a diagram illustrating the splitting of subcarriers using electronic filters as implemented in a CV QKD signal processor according to an embodiment;
Fig. 4b shows a diagram illustrating the downconversion of each subcarrier of figure 4a into the baseband as implemented in a CV QKD signal processor according to an embodiment;
Fig. 5 shows a flow diagram illustrating a method of generating a CV-QKD signal according to an embodiment of the invention; and
Fig. 6 shows a flow diagram illustrating a method of generating one or more keys according to an embodiment of the invention.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the invention may be placed. It is understood that other aspects may be utilized and structural or logical changes may be made without departing from the scope of the invention. The following detailed description, therefore, is not to be taken in a limiting sense, as the scope of the invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

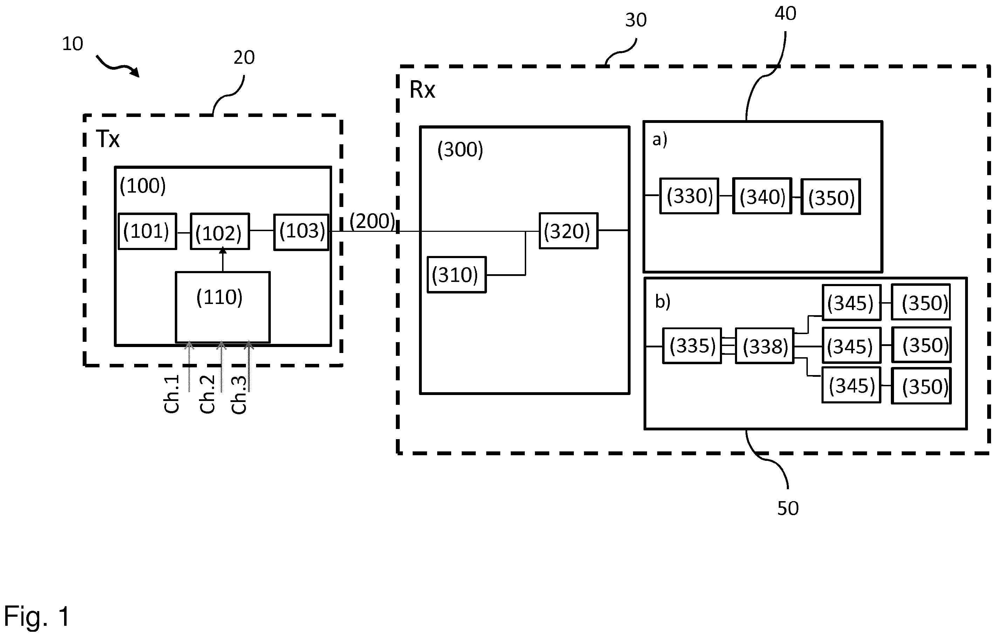

Figure 1 shows a schematic diagram illustrating a CV QKD system 10 including a CV QKD transmitter 20 and a CV QKD receiver 30. The CV QKD transmitter 20 comprises a CV-QKD signal generator 100 and may comprises further components such as a power supply (not shown) or a housing (not shown). The CV QKD receiver 30 comprises a CV-QKD signal processor 300 and may comprise further components such as a power supply (not shown) or a housing (not shown). The CV QKD transmitter 20 is configured to transmit an optical signal via an appropriate optical transmission medium 200, such as an optical fiber, to the CV QKD receiver 30.

As will be described in more detail below, the CV QKD signal generator 100 comprises a radio frequency, RF, modulator 110 and an optical modulator 102. The RF modulator 110 is configured to modulate a RF signal with quantum key information for constructing one or more keys, wherein the RF modulator spreads the quantum key information over multiple (i.e. two or more) RF subcarriers of the RF signal. The optical modulator 102 is configured to generate a CV-QKD signal by modulating an optical signal 101 (from, e.g., a laser source) with the RF signal. The optical signal 101 may also be referred to as the optical carrier. The optical signal 101 may be a laser beam generated by a laser source (not shown). The laser source may be part of the signal generator 100. In an embodiment, the one or more keys are multiple keys and the RF modulator is configured to modulate each subcarrier with quantum key information for constructing one of the multiple keys.

As will be described in more detail below, the CV QKD signal processor 300 comprises a detector 320 and processing circuitry 40 or 50 connected to an output of the detector 320. The detector 320 is configured to derive an RF signal from the optical CV-QKD signal received from the CV QKD signal generator 100. The detector 320 may be a balanced detector, e.g., a balanced homodyne detector. The processing circuitry is configured to derive quantum key information from multiple subcarriers of the RF signal. In an embodiment, the CV QKD signal processor 300 is configured to determine a key on the basis of the quantum key information by cooperating with the CV QKD signal generator 100. Cooperating with the CV-QKD transmitter 100 may comprise exchanging information via a classical (i.e. non-quantum) channel, for instance, within the framework of a post-processing protocol.

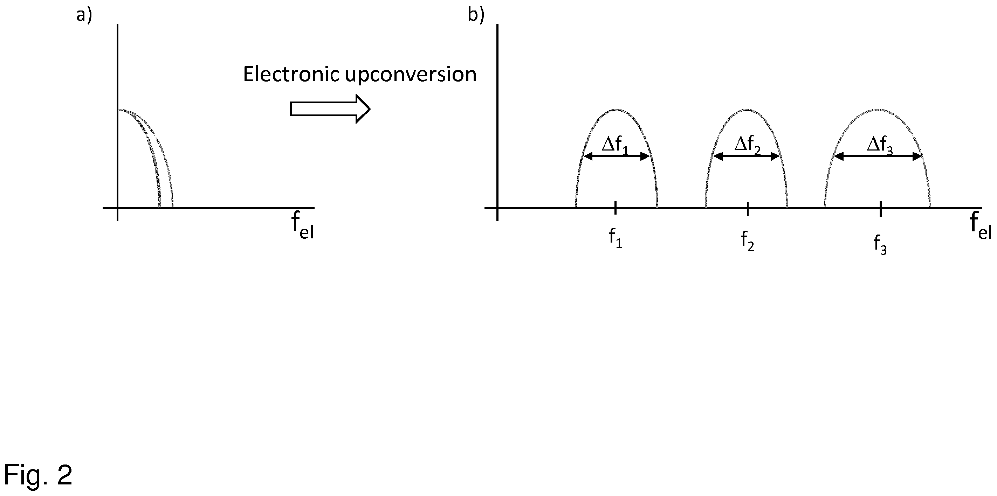

Thus, the CV QKD signal generator 100, is configured to encode the information (the initial key bits) to be sent to the CV QKD signal processor 300 in separate frequency bands or subcarriers (also referred to as sub-channels) and thereby makes an adaptive rate scheme possible. By way of example, in the exemplary scheme shown in the figures three independent sequences of initial key bits are encoded in subcarriers, i.e. sub-channels Ch1, Ch2, and Ch3, respectively. At this stage the information of each subcarrier (Ch1, Ch2, Ch3, etc.) is in the base band, as illustrated in figure 2a. The subcarriers are then electrically upconverted by the RF modulator 110, preferably in such a way that each subcarrier has a different center frequency (f₁, f₂, f₃, etc.), as illustrated by way of an example in figure 2b. Each subcarrier can have a bandwidth (Δf₁, Δf₂, Δf₃, etc.), which may differ between the subcarriers. For instance, one of the subcarriers can occupy a wider frequency band than another one of the subcarriers.

Thus, after the electric up-conversion by the RF modulator 110 of the CV QKD signal generator 100 the information is spread over a wide frequency band, containing the individual information subcarriers or channels, as illustrated in figure 2b.

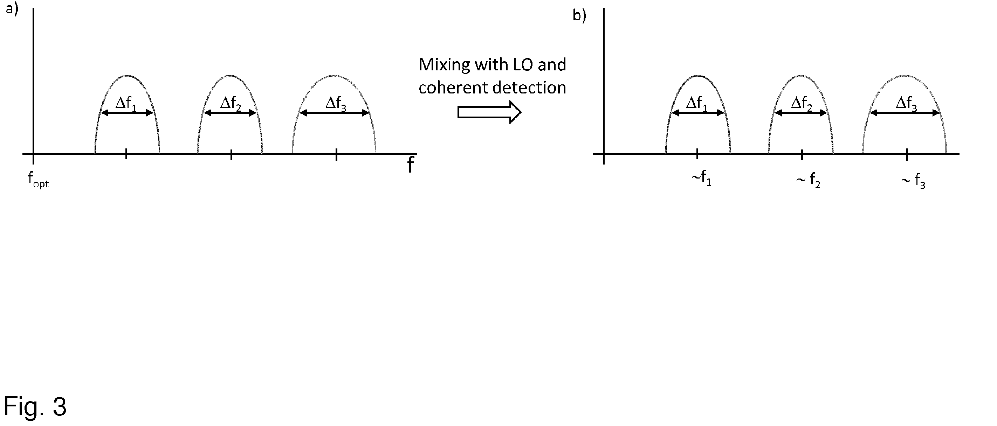

The optical modulator 102 of the QKD signal generator 100 is configured to modulate the upconverted signal from the RF modulator 110 onto the optical carrier 101, preferably using a coherent modulation scheme, such as phase encoding. By way of example, the optical carrier has a frequency of fₒₚₜ. The complete signal in the optical frequency domain is depicted in figure 3a.

In an embodiment, the CV QKD signal generator 100 further comprises an attenuator 103 configured to attenuate the optical signal provided by block 102 to safeguard secrecy according to CV-QKD security proofs. Thereafter, the CV QKD signal generator 100 is configured to send the optical carrier, i.e. the optical signal with the RF signal, via the medium 200 to the CV QKD signal processor 300.

In an embodiment in which the detector 320 is a balanced detector, the detector 320 mixes optical carrier with a mixing signal provided by an optical oscillator 310 of the CV QKD signal processor 300. In an embodiment, the frequency f_{LO} of the mixing signal is close or similar to the frequency of the optical carrier, i.e. f_{LO} ≈ fₒₚₜ. After the mixing, the CV QKD signal processor 300 is configured to measure the signal using, for instance, a balanced detector 320 to generate an electrical signal which carries the information of the subcarriers in the baseband or an intermediate band. As illustrated in figure 3b, in an embodiment, this signal spans the base band or the intermediate band and has the same channel frequencies as the transmitter (f₁, f₂, f₃, etc.).

The detailed views (a) and (b) of figure 1 illustrate two main embodiments of the CV QKD signal processor 300 for splitting the different subcarriers and thereby providing an adaptive bandwidth to the user.

In an embodiment the CV QKD signal processor 300 has the additional components 40 shown in the detailed view (a) of figure 1. In this embodiment, the CV QKD signal processor 300 further comprises an analogue-to-digital converter (ADC) 330 configured to digitize the full electrical bandwidth of the measured signal. In an embodiment, the ADC 330 is a broad bandwidth ADC having a bandwidth > Δf₁ +Δf₂+Δf₃+..... Downstream of the ADC 330 the CV QKD signal processor 300 further comprises one or more digital filters 340 configured to separate all the different subcarriers or combination of subcarriers. After this filtering stage one or more QKD post-processing units 350 of the CV QKD signal processor 300 can proceed with the QKD post processing for the subcarriers.

In case of more than one subcarrier, there can be two ways to process the data. In the first way, the data in each subcarrier can be processed independently with a separate QKD post-processing unit 350. In the second way, the data in the subcarriers are put together and processed with one QKD post-processing module 350. For example, two data streams can be combined into one by interleaving them.

A variation of the above embodiment is that the electrical signal is passed through an electronic filter unit. Depending on the allocated bandwidth only selected subcarriers are passed through. The resulting signal is digitized in the ADC 330 with large bandwidth and passed on to the digital filters 340 and the QKD post-processing unit(s) 350, as described above.

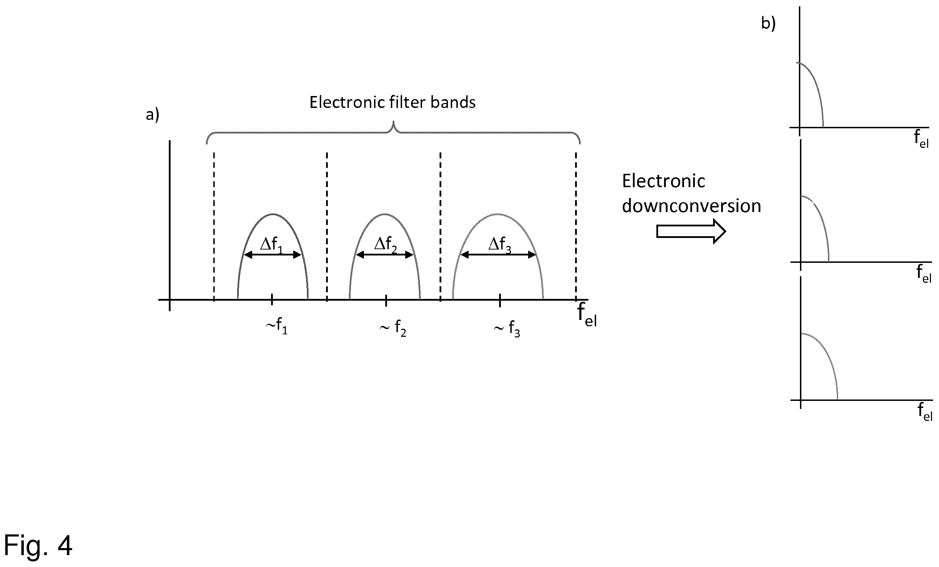

In a further embodiment the CV QKD signal processor 300 has the additional components 50 shown in the detailed view (b) of figure 1. In this embodiment, the CV QKD signal processor 300 is configured to split the electrical signal first into all different subcarriers (processing block 335) and subsequently to down-convert the electrical signal into the baseband (processing block 338). These steps implemented in the processing blocks 335 and 338 of the CV QKD signal processor 300 are also illustrated in figures 4a and 4b. Each subcarrier is sampled via a respective low bandwidth ADC 345 before being passed onto the one or more QKD post-processing units 350 of the CV QKD signal processor 300. In this embodiment, a provider selective reduction of bandwidth can be achieved by, e.g., switching off one or more electric filters or disabling post processing for certain subcarriers. The electronic filter unit 335 may, depending on the allocated bandwidth of the service, allow only selected subcarriers to pass through.

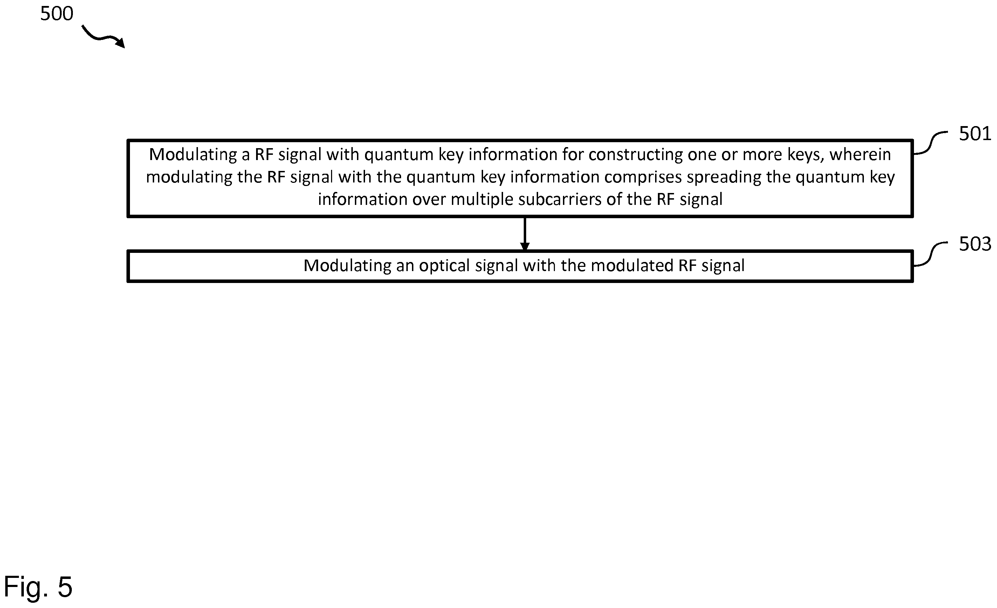

Figure 5 shows a flow diagram illustrating a method 500 of generating a CV-QKD signal, wherein the method 500 comprises the steps of: modulating 501 a RF signal with quantum key information for constructing one or more keys, wherein modulating the RF signal with the quantum key information comprises spreading the quantum key information over multiple subcarriers of the RF signal; and modulating 503 an optical signal with the RF signal.

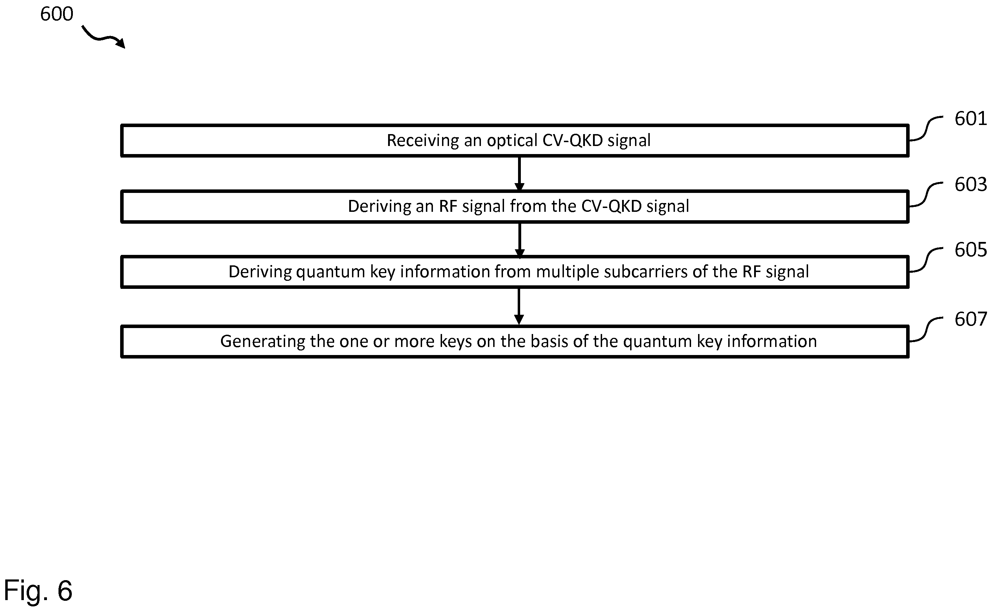

Figure 6 shows a flow diagram illustrating a method 600 of generating one or more keys, wherein the method 600 comprises the steps of: receiving 601 an optical CV-QKD signal; deriving 603 an RF signal from the CV-QKD signal; deriving 605 quantum key information from multiple subcarriers of the RF signal; and generating 607 the one or more keys on the basis of the quantum key information. Deriving the RF signal from the CV-QKD signal may comprise coherent detection.

Thus, embodiments of the invention provide CV-QKD for supporting multiple subcarriers or multiple rates. According to embodiments of the invention, the subcarriers or rates may be adapted to a usage policy of a provider (usage cost), computational power for doing QKD post-processing, or conditions of the subcarriers. According to embodiments of the invention, multiple subcarriers occupying different frequency bands can be encoded with QKD information and be transmitted together by the transmitter 100 on a single optical carrier. According to embodiments of the invention, the receiver 300 may use one or more subcarriers to perform QKD. According to embodiments of the invention, subcarriers may be extracted digitally or electronically at the receiver 300 and encoded digitally or electronically at the transmitter 100. According to embodiments of the invention, subcarriers may be processed with QKD post-processing separately. According to embodiments of the invention, balanced detectors can operate with a bandwidth spanning one quantum subcarrier. According to embodiments of the invention, balanced detectors can operate with a bandwidth spanning more than one quantum subcarrier. According to embodiments of the invention, the ADC 330 can operate with a bandwidth spanning one quantum subcarrier. According to embodiments of the invention, the ADC 330 can operate with a bandwidth spanning more than one quantum subcarrier.

Some of the embodiments described above provide one or more of the following advantages: the system 10 stays at optimal clock speed; bandwidth can be allocated in multiples of the subcarriers; no hardware changes necessary;

The person skilled in the art will understand that the "blocks" ("units") of the various figures (method and apparatus) represent or describe functionalities of embodiments of the invention (rather than necessarily individual "units" in hardware or software) and thus describe equally functions or features of apparatus embodiments as well as method embodiments. A unit may correspond to one or more method steps.

In the embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A continuous variable quantum key distribution, CV-QKD, signal generator (100), comprising:
a radio frequency, RF, modulator (110) configured to modulate a RF signal with quantum key information for constructing one or more keys, wherein the RF modulator is configured to spread the quantum key information over multiple RF subcarriers of the RF signal, wherein the RF modulator (110) is configured to electrically upconverted the subcarriers so that information is spread over a frequency band, containing the individual information subcarriers or channels; and
an optical modulator (102) configured to generate a CV-QKD signal by modulating an optical signal (101) with the RF signal, and **characterized in that** the one or more keys are multiple keys and the RF modulator (110) is configured to modulate each subcarrier with quantum key information for constructing one of the multiple keys, wherein the optical modulator (102) is configured to modulate the upconverted signal from the RF modulator (110) onto an optical carrier (101).

2. The CV-QKD signal generator (100) of claim 1, wherein the subcarriers occupy different frequency bands.

3. The CV-QKD signal generator (100) of any one of the preceding claims, wherein the subcarriers have different center frequencies.

4. The CV-QKD signal generator (100) of any one of the preceding claims, wherein one of the subcarriers occupies a wider frequency band than another one of the subcarriers.

5. The CV-QKD signal generator (100) of any one of the preceding claims, configured to inject the CV-QKD signal into an optical transmission path (200).

6. A method (500) of generating a continuous variable quantum key distribution, CV-QKD, signal, wherein the method (500) comprises:
modulating (501) a radio-frequency, RF, signal with quantum key information for constructing one or more keys, wherein modulating the RF signal with the quantum key information comprises spreading the quantum key information over multiple subcarriers of the RF signal, wherein the subcarriers are electrically upconverted so that information is spread over a frequency band, containing the individual information subcarriers or channels; and
generating a CV-QKD signal by modulating (503) an optical signal with the radio-frequency, RF, signal,
and **characterized in that** the one or more keys are multiple keys and the modulating (501) comprises modulating each subcarrier with quantum key information for constructing one of the multiple keys, wherein the upconverted signal is modulated onto an optical carrier.

7. A continuous variable quantum key distribution, CV-QKD, signal processor (300), comprising:
a detector (320) configured to derive a radio frequency, RF, signal from an optical CV-QKD signal received from the CV-QKD signal generator (100) of any one of the claims 1 to 5; and
processing circuitry configured to derive quantum key information from multiple subcarriers of the RF signal.

8. The CV-QKD signal processor (300) of claim 7, wherein the detector (320) is configured to mix the optical CV-QKD signal with a local oscillator signal (310).

9. The CV-QKD signal processor (300) of claim 7 or 8, further comprising an analog-to-digital converter (330) configured to sample the RF signal.

10. The CV-QKD signal processor (300) of any one of claims 7 to 9, configured to determine a key on the basis of the quantum key information by cooperating with the CV-QKD transmitter (100).

11. A method (600) of generating one or more keys, the method (600) comprising:
receiving (601) an optical continuous variable quantum key distribution, CV-QKD, signal obtained from the method (500) of generating a continuous variable quantum key distribution, CV-QKD, signal of claim 6;
deriving (603) a radio frequency, RF, signal from the CV-QKD signal;
deriving (605) quantum key information from multiple subcarriers of the RF signal; and
generating (607) the one or more keys on the basis of the quantum key information.

12. A computer program product comprising program code for controlling a CV-QKD signal generator (100) to perform the method (500) of claim 6
or for controlling a CV-QKD signal processor (300) to
perform the method (600) of claim 11 when executed on a processor.

13. A continuous variable quantum key distribution, CV-QKD, system (10), comprising a CV-QKD transmitter (20) which comprises a signal generator (100) according to any one of claims 1 to 6 and a CV-QKD receiver (30) which comprises a signal processor (300) according to any one of claims 7 to 10.

## Patentansprüche

1. Generator (100) für Signale zur Quantenschlüsselverteilung mit kontinuierlichen Variablen (continuous variable quantum key distribution, CV-QKD), der Folgendes umfasst:
einen Hochfrequenz(HF)-Modulator (110), der konfiguriert ist, um ein HF-Signal mit Quantenschlüsselinformationen zum Konstruieren eines oder mehrerer Schlüssel zu modulieren, wobei der HF-Modulator konfiguriert ist, um die
Quantenschlüsselinformationen über mehrere HF-Subträger des HF-Signals zu verteilen, wobei der HF-Modulator (110) konfiguriert ist, um die Subträger elektrisch aufwärtszuwandeln, so dass Informationen über ein Frequenzband verteilt werden,
das die einzelnen Informationssubträger oder -kanäle enthält; und
einen optischen Modulator (102), der konfiguriert ist, um ein CV-QKD-Signal durch Modulieren eines optischen Signals (101) mit dem HF-Signal zu erzeugen, und
**dadurch gekennzeichnet, dass**
der eine oder die mehreren Schlüssel Mehrfachschlüssel sind und der HF-Modulator (110) konfiguriert ist, um jeden Subträger mit Quantenschlüsselinformationen zum Konstruieren eines der Mehrfachschlüssel zu modulieren, wobei der optische Modulator (102) konfiguriert ist, um das aufwärtsgewandelte Signal vom HF-Modulator (110) auf einen optischen Träger (101) aufzumodulieren.

2. CV-QKD-Signalgenerator (100) nach Anspruch 1, wobei die Subträger unterschiedliche Frequenzbänder belegen.

3. CV-QKD-Signalgenerator (100) nach einem der vorstehenden Ansprüche, wobei die Subträger unterschiedliche Mittenfrequenzen aufweisen.

4. CV-QKD-Signalgenerator (100) nach einem der vorstehenden Ansprüche, wobei einer der Subträger ein breiteres Frequenzband belegt als ein anderer der Subträger.

5. CV-QKD-Signalgenerator (100) nach einem der vorstehenden Ansprüche, konfiguriert zum Einspeisen des CV-QKD-Signals in einen optischen Übertragungspfad (200).

6. Verfahren (500) zum Erzeugen eines Signals zur Quantenschlüsselverteilung mit kontinuierlichen Variablen (SV-QKD), wobei das Verfahren (500) Folgendes umfasst:
Modulieren (501) eines Hochfrequenz(HF)-Signals mit Quantenschlüsselinformationen zum Konstruieren eines oder mehrerer Schlüssel, wobei das Modulieren des HF-Signals mit den Quantenschlüsselinformationen das Verteilen der Quantenschlüsselinformationen über mehrere Subträger des HF-Signals umfasst,
wobei die Subträger elektrisch aufwärtsgewandelt werden, so dass Informationen über ein Frequenzband verteilt werden, das die einzelnen Informationssubträger oder - kanäle enthält; und
Erzeugen eines CV-QKD-Signals durch Modulieren (503) eines optischen Signals mit dem Hochfrequenz(HF)-Signal, und **dadurch gekennzeichnet, dass** der eine oder die mehreren Schlüssel Mehrfachschlüssel sind und das Modulieren (501) das Modulieren jedes Subträgers mit Quantenschlüsselinformationen zum Konstruieren eines der Mehrfachschlüssel umfasst, wobei das aufwärtsgewandelte Signal auf einen optischen Träger aufmoduliert wird.

7. Signalprozessor (300) für Signale zur Quantenschlüsselverteilung mit kontinuierlichen Variablen (CV-QKD), der Folgendes umfasst:
einen Detektor (320), der konfiguriert ist, um ein Hochfrequenz(HF)-Signal aus einem optischen CV-QKD-Signal abzuleiten, das von dem CV-QKD-Signalgenerator (100) nach einem der Ansprüche 1 bis 5 empfangen wird; und
Verarbeitungsschaltungen, die konfiguriert sind, um Quantenschlüsselinformationen aus mehreren Subträgern des HF-Signals abzuleiten.

8. CV-QKD-Signalprozessor (300) nach Anspruch 7, wobei der Detektor (320) konfiguriert ist, um das optische CV-QKD-Signal mit einem Lokaloszillatorsignal (310) zu mischen.

9. CV-QKD-Signalprozessor (300) nach Anspruch 7 oder 8, der ferner einen Analog-Digital-Wandler (330) umfasst, der zum Abtasten des HF-Signals konfiguriert ist.

10. CV-QKD-Signalprozessor (300) nach einem der Ansprüche 7 bis 9, der konfiguriert ist, um einen Schlüssel auf der Grundlage der Quantenschlüsselinformationen zu bestimmen, indem er mit dem CV-QKD-Sender (100) zusammenarbeitet.

11. Verfahren (600) zum Erzeugen eines oder mehrerer Schlüssel, wobei das Verfahren (600) Folgendes umfasst:
Empfangen (601) eines optischen Signals zur Quantenschlüsselverteilung mit kontinuierlichen Variablen (CV-QKD), das aus dem Verfahren (500) zum Erzeugen eines Signals zur Quantenschlüsselverteilung mit kontinuierlichen Variablen (CV-QKD) nach Anspruch 6 erlangt wird;
Ableiten (603) eines Hochfrequenz(HF)-Signals (HF-Signals) aus dem CV-QKD-Signal;
Ableiten (605) von Quantenschlüsselinformationen aus mehreren Subträgern des HF-Signals; und
Erzeugen (607) des einen oder der mehreren Schlüssel auf der Grundlage der Quantenschlüsselinformationen.

12. Computerprogrammprodukt, das Programmcode zum Steuern eines CV-QKD-Signalgenerators (100) zum Durchführen des Verfahrens (500) nach Anspruch 6 oder zum Steuern eines CV-QKD-Signalprozessors (300) zum Durchführen des Verfahrens (600) nach Anspruch 11 umfasst, wenn er auf einem Prozessor ausgeführt wird.

13. System (10) zur Quantenschlüsselverteilung mit kontinuierlichen Variablen (CV-QKD), das einen CV-QKD-Sender (20), der einen Signalgenerator (100) nach einem der Ansprüche 1 bis 6 umfasst, und einen CV-QKD-Empfänger (30), der einen Signalprozessor (300) nach einem der Ansprüche 7 bis 10 umfasst, umfasst.

## Revendications

1. Générateur de signal de distribution quantique de clés à variable continue, CV-DQC (100), comprenant :
un modulateur radiofréquence, RF (110) configuré pour moduler un signal RF avec des informations quantiques de clés afin de construire une ou plusieurs clés, dans lequel le modulateur RF est configuré pour répartir les informations quantiques de clés sur de multiples sous-porteuses RF du signal RF, dans lequel le modulateur RF (110) est configuré pour convertir de manière ascendante électriquement les sous-porteuses de sorte que des informations sont réparties sur une bande de fréquences, contenant les sous-porteuses ou canaux d'informations individuels ; et
un modulateur optique (102) configuré pour générer un signal CV-DQC en modulant un signal optique (101) avec le signal RF, et **caractérisé en ce que**
la ou les clés sont des clés multiples et le modulateur RF (110) est configuré pour moduler chaque sous-porteuse avec des informations quantiques de clés pour construire une des clés multiples, dans lequel le modulateur optique (102) est configuré pour moduler le signal converti de manière ascendante à partir du modulateur RF (110) sur un support optique (101).

2. Générateur de signal CV-DQC (100) selon la revendication 1, dans lequel les sous-porteuses occupent des bandes de fréquences différentes.

3. Générateur de signal CV-DQC (100) selon l'une quelconque des revendications précédentes, dans lequel les sous-porteuses ont des fréquences centrales différentes.

4. Générateur de signal CV-DQC (100) selon l'une quelconque des revendications précédentes, dans lequel une des sous-porteuses occupe une bande de fréquences plus large qu'une autre des sous-porteuses.

5. Générateur de signal CV-DQC (100) selon l'une quelconque des revendications précédentes, configuré pour injecter le signal CV-DQC dans un chemin de transmission optique (200).

6. Procédé (500) de génération d'un signal de distribution quantique de clés à variable continue, CV-DQC, dans lequel le procédé (500) comprend :
la modulation (501) d'un signal radiofréquence, RF, avec des informations quantiques de clés pour construire une ou plusieurs clés, dans lequel la modulation du signal RF avec les informations quantiques de clés comprend la répartition des informations quantiques de clés sur de multiples sous-porteuses du signal RF, dans lequel les sous-porteuses sont converties de manière ascendante électriquement de sorte que des informations sont réparties sur une bande de fréquences, contenant les sous-porteuses ou canaux d'informations individuels ; et
la génération d'un signal CV-DQC en modulant (503) un signal optique avec le signal radiofréquence, RF, et **caractérisé en ce que**
la ou les clés sont des clés multiples et la modulation (501) comprend la modulation de chaque sous-porteuse avec des informations quantiques de clés pour construire une des clés multiples, dans lequel le signal converti de manière ascendante est modulé sur un support optique.

7. Processeur de signal de distribution quantique de clés à variable continue, CV-DQC (300), comprenant :
un détecteur (320) configuré pour dériver un signal radiofréquence, RF, à partir d'un signal CV-DQC optique reçu à partir du générateur de signal CV-DQC (100) selon l'une quelconque des revendications 1 à 5 ; et
un système de circuits de traitement configuré pour dériver des informations quantiques de clés à partir de multiples sous-porteuses du signal RF.

8. Processeur de signal CV-DQC (300) selon la revendication 7, dans lequel le détecteur (320) est configuré pour mélanger le signal CV-DQC optique avec un signal d'oscillateur local (310).

9. Processeur de signal CV-DQC (300) selon la revendication 7 ou 8, comprenant en outre un convertisseur analogique à numérique (330) configuré pour échantillonner le signal RF.

10. Processeur de signal CV-DQC (300) selon l'une quelconque des revendications 7 à 9, configuré pour déterminer une clé sur la base des informations quantiques de clés en coopérant avec le transmetteur CV-DQC (100).

11. Procédé (600) de génération d'une ou plusieurs clés, le procédé (600) comprenant :
la réception (601) d'un signal optique de distribution quantique de clés à variable continue, CV-DQC, obtenu à partir du procédé (500) de génération d'un signal de distribution quantique de clés à variable continue, CV-DQC, selon la revendication 6 ;
la dérivation (603) d'un signal radiofréquence, RF, à partir du signal CV-DQC ;
la dérivation (605) d'informations quantiques de clés à partir de multiples sous-porteuses du signal RF ; et
la génération (607) de la ou des clés sur la base des informations quantiques de clés.

12. Produit-programme informatique comprenant un code de programme permettant de commander un générateur de signal CV-DQC (100) pour réaliser le procédé (500) selon la revendication 6 ou permettant de commander un processeur de signal CV-DQC (300) pour réaliser le procédé (600) selon la revendication 11 lorsqu'il est exécuté sur un processeur.

13. Système de distribution quantique de clés à variable continue, CV-DQC (10), comprenant un transmetteur CV-DQC (20) qui comprend un générateur de signal (100) selon l'une quelconque des revendications 1 à 6 et un récepteur CV-DQC (30) qui comprend un processeur de signal (300) selon l'une quelconque des revendications 7 à 10.
